# EUROPÄISCHE PATENTSCHRIFT

(11) **EP 2 745 081 B1**
(45) Veröffentlichungstag und Bekanntmachung des Hinweises auf die Patenterteilung: **01.01.2020**
(21) Anmeldenummer: 12729923.8
(22) Anmeldetag: 12.06.2012
(51) Int. Cl.: G01D 3/08

(54) **SENSORMODUL ZUR ERFASSUNG EINES BETRIEBSPARAMETERS, VERFAHREN ZUR ÜBERWACHUNG EINES SENSORMODULS**
SENSOR MODULE FOR DETECTING AN OPERATING PARAMETER, METHOD FOR MONITORING A SENSOR MODULE
MODULE CAPTEUR POUR LA DÉTECTION D'UN PARAMÈTRE DE FONCTIONNEMENT, PROCÉDÉ DE SURVEILLANCE D'UN MODULE CAPTEUR

(30) Priorität: 17.08.2011 DE 102011081147
(43) Veröffentlichungstag der Anmeldung: 25.06.2014
(73) Patentinhaber: Robert Bosch GmbH, 70442 Stuttgart (DE)
(72) Erfinder: GROSSMANN, Alex, 71229 Leonberg (DE); DAECKE, Dirk, 70619 Stuttgart (DE)
(86) Internationale Anmeldenummer: PCT/EP2012/061075
(87) Internationale Veröffentlichungsnummer: WO 2013/023804

(56) Entgegenhaltungen:
- DE-A1- 19 905 071
- DE-A1- 19 911 526
- JP-A- H05 101 294
- US-A1- 2010 287 398

## Beschreibung

### Stand der Technik

Es ist bekannt, Sensormodule vielfältiger Art zu verwenden, insbesondere im Kraftfahrzeugbereich, um unterschiedliche Betriebsparameter zu erfassen, beispielsweise Drucksensoren, Stellungssensoren, Luftmassensensoren, Abstandssensoren, Helligkeitssensoren und Ähnliches. Die Sensormodule wandeln die zu erfassende physikalische Größe, d.h. den betreffenden Betriebsparameter, in ein elektrisches Signal um, das zur weiteren Verarbeitung einer zentralen oder einer entfernt gelegenen Datenverarbeitungsvorrichtung zugeführt wird.

Insbesondere werden aktive Sensormodule verwendet, die eine Stromversorgung erfordern, beispielsweise um den Betriebsparameter zu erfassen oder um ein Sensorsignal direkt am Sensormodul aufzubereiten, um eine störungsfreie Übertragung zu ermöglichen. Die hierzu erforderliche Versorgungsspannung wird in Kraftfahrzeugen über eine Versorgungsleitung übertragen, die beispielsweise aufgrund von korrodierten oder unvollständig zusammengefügten Steckkontakten einen hohen Widerstand aufweisen kann. Wird jedoch ein aktives Sensormodul mit einer zu geringen Spannung versorgt, so sind die vom Sensormodul abgegeben Signale fehlerhaft oder unzuverlässig..
Es sind Sensormodule bekannt, die Unterspannungs- und Überspannungszustände der Versorgungsspannung erkennen. Unterschreitet oder überschreitet die Spannungsversorgung eine feste vorgegebene Spannungsschwelle, wird dieser Zustand von dem Sensormodul erkannt. Das Sensormodul setzt dann die Übertragung der Sensorsignale zur Datenverarbeitungsvorrichtung aus. Alternativ kann das Sensormodul ein Fehlersignal (anstelle des Messsignals) senden. Die Entscheidung, ob Unterspannung oder Überspannung vorliegt, findet wegen der vorgegebenen Schwellen im Sensormodul statt und erfordert einen signifikanten Schaltungsaufwand. Ein Beispiel für ein derartiges Sensormodul ist im Folgenden gegeben.
Die Druckschrift DE 41 05 283 A1 beschreibt ein Durchflussmessgerät mit einem Druckaufnehmer, der an eine Recheneinheit angeschlossen ist. Ferner ist eine Unterspannungserkennungsschaltung an diese Recheneinheit angeschlossen. Wird ein Spannungseinbruch erfasst, so speichert die Recheneinheit alle wichtigen Daten vor Ort. Demgemäß wird die Versorgungsspannung unmittelbar vor Ort ausgewertet und es werden Schutzmaßnahmen direkt vor Ort im Sensormodul ergriffen. Dies erfordert komplexe Schaltungsteile im Sensormodul, um die Versorgungsspannung auszuwerten und um Schutzmaßnahmen zu ergreifen. Ferner müssen im Sensormodul Elemente vorliegen, die ein sicheres Abspeichern ermöglichen. Dies erfordert einen hochkapazitiven Energiespeicher, der die Energieversorgung während der Datenspeicherung gewährleistet.

Die Druckschriften DE 199 05 071 A1, DE 199 11 526 A1, US 2010/0287398 A1 und JP 05-101294 offenbaren bekannte Sensormodule mit einer Überwachung der Versorgungsspannung.

Die komplexen Schaltungselemente zur Spannungsauswertung und zur Datenspeicherung sowie der Energiespeicher erfordern komplexe Schaltungselemente und erzeugen einen beträchtlichen Platzbedarf. Da insbesondere in der Kfz-Technik wenig Platz für Sensoren verfügbar ist und die zusätzlichen Schaltungselemente zu einem substantiellen Schaltungsaufwand führen, ist es eine Aufgabe der Erfindung, den Platzbedarf gegenüber dem Stand der Technik zu verringern und einen Spannungsabfall in einem Sensormodul sicher zu erkennen.

### Offenbarung der Erfindung

Diese Aufgabe wird gelöst durch das Sensormodul nach Anspruch, sowie durch das Verfahren nach Anspruch 5. Die Erfindung ermöglicht eine äußerst sichere, präzise und einfach zu implementierende Überwachung der Versorgungsspannung eines Sensormoduls. Insbesondere sind zur Ausführung der Erfindung keine wesentlichen Hardwareänderungen in einem Kraftfahrzeug notwendig, wobei es sich besonders vorteilhaft auswirkt, dass die Verkabelung nicht geändert werden muss. Darüber hinaus können zentrale Verarbeitungskomponenten weiterverwendet werden, die über Zuleitungen mit den einzelnen Sensoren verbunden sind, um zusätzlich die Funktion einer Versorgungsspannungsüberwachung vorzusehen. Die erfindungsgemäßen Sensormodule erfordern keinen besonderen Schaltungsaufwand und insbesondere keine Energiespeicher, die zum Betrieb von Spannungsüberwachungseinrichtungen im Sensormodul erforderlich wären. Es können bei der Umsetzung der Erfindung bestehende Hardwarekonzepte, wie sie im Kfz-Bereich üblich sind, im Wesentlichen beibehalten werden. Insbesondere können zahlreiche Komponenten von bereits vorhandenen Kfz-Einrichtungen im Wesentlichen weiterverwendet werden, ohne dass signifikante Änderungen an der Hardware vorgenommen werden müssen.

Erfindungsgemäß wird bei der Signalaufbereitung, insbesondere bei einer Analog- /Digitalwandlung und bei einer Signalübertragung, neben einem Sensorsignal, welches einen zu erfassenden Betriebsparameter wiedergibt, auch ein Versorgungssignal parallel zu dem Sensorsignal verarbeitet, wobei das Versorgungssignal eine Versorgungsspannung oder einen Versorgungsstrom wiedergibt. Daher wird das Sensorsignal gleichermaßen wie das Versorgungssignal verarbeitet, insbesondere indem in einem Sensormodul vor Ort beide von analoger in digitale Form gewandelt werden und gemeinsam von einer Signalübertragungseinheit übertragen werden. Die Signalübertragungseinheit überträgt ein Kombinationssignal, welches das Versorgungssignal sowie das Sensorsignal wiedergibt, über eine Verbindungsleitung, welche das Kombinationssignal an eine zentrale oder entfernt gelegene Datenverarbeitungsvorrichtung überträgt. Tritt eine Unterspannung in dem Versorgungssignal auf, so wird ein betreffendes Signal, welches das Versorgungssignal wiedergibt, im Rahmen des übertragenen Kombinationssignals über eine Leitung übertragen. Die Datenverarbeitungseinheit, welche das Kombinationssignal erhält, kann somit nicht nur den Inhalt des Sensorsignals, sondern auch die Verlässlichkeit des Sensorsignals auswerten, indem das Versorgungssignal berücksichtigt wird. Wenn das Versorgungssignal einen Versorgungszustand wiedergibt, der in einem Nominalbereich liegt, kann das Sensorsignal als korrektes Sensorsignal angenommen werden. Wenn das Versorgungssignal einen Versorgungszustand wiedergibt, der außerhalb eines Normbereichs liegt, dann kann das zugehörige Sensorsignal als unsicher bezeichnet werden. Gleichzeitig kann im letzteren Fall ein Warnsignal angegeben werden, welches einen Versorgungszustand wiedergibt, der außerhalb der Norm liegt. Als Versorgungszustand wird insbesondere die Höhe der Versorgungsspannung und/oder die Höhe des Versorgungsstroms bezeichnet.

Die Erfindung betrifft ein Sensormodul eingerichtet zur Erfassung eines Betriebsparameters eines Kraftfahrzeugs. Das Sensormodul umfasst ein Sensorelement eingerichtet zur Abgabe eines Sensorsignals. Das Sensorelement wandelt eine physikalische Größe, die den Betriebsparameter wiedergibt, in das Sensorsignal um, welches als elektrisches Signal vorliegt.

Als Sensorelemente werden insbesondere Drucksensoren verwendet, die auf Dehnungsmessstreifen beruhen oder die Drucksensorelemente umfassen, deren Widerstand oder abfallende elektrische Spannung von der mechanischen Spannung bzw. von dem Druck abhängt, die bzw. der auf diese wirkt. Ferner kann das Sensorelement elektromechanische oder magnetische Stellungssensoren umfassen, beispielsweise auf dem Hall-Effekt beruhende Stellungssensoren oder auch optisch abgetastete Stellungssensoren. Ferner kann das Sensormodul ein Luftmassensensor sein, der beispielsweise mittels Ultraschall einen Luftmassenstrom erfasst. Das Sensorelement kann ein passives Sensorelement sein oder ein aktives Sensorelement, an das im Rahmen des Betriebs eine Spannung angelegt wird, etwa um einen Widerstand zu erfassen. Das Sensormodul ist insbesondere ein Sensormodul eingerichtet zur Erfassung eines Betriebsparameters einer Verbrennungsmotorsteuerung des Kraftfahrzeugs oder kann ein Sensormodul sein, das Größen wie Temperatur, Abstand zu einem Hindernis, Feuchtigkeit, Niederschlag oder komplexere Größen wie ein Videobild erfasst. Das Sensorelement ist insbesondere eingerichtet zur Abgabe eines analogen Sensorsignals, welches den erfassten Betriebsparameter und beispielsweise einen dieser Betriebsparameter wiedergibt.

Das erfindungsgemäße Sensormodul umfasst ferner einen Analog/Digital-Wandler - im Folgenden als A/D-Wandler bezeichnet -, der mit dem Sensorelement verbunden ist. Insbesondere ist der Ausgang des Sensorelements mit dem A/D-Wandler verbunden. Das Sensorelement kann direkt mit dem A/D-Wandler verbunden sein oder kann über weitere Datenübertragungskomponenten, etwa einen Multiplexer, verbunden sein. Daher kann die Verbindung zwischen Sensorelement und A/D-Wandler eine direkte oder eine indirekte Verbindung sein.

Das Sensormodul umfasst ferner eine mit dem A/D-Wandler verbundene Signalübertragungseinheit. Auch hier kann die Verbindung direkt oder indirekt sein; insbesondere kann ein Ausgang des A/D-Wandlers direkt mit der Signalübertragungseinheit, insbesondere mit deren Eingang, verbunden sein. Alternativ ist dieser Ausgang über eine weitere Datenübertragungskomponente, beispielsweise über einen Multiplexer, mit der Signalübertragungseinheit verbunden. Die Signalübertragungseinheit ist eingerichtet, das von dem A/D-Wandler gewandelte Signal zu übertragen.

Das Sensormodul umfasst ferner einen Versorgungssignalabgriff, an dem ein ungewandeltes Versorgungssignal anliegt, welches eine Versorgungsspannung oder einen Versorgungsstrom des Sensormoduls wiedergibt. Das ungewandelte Versorgungssignal kann unmittelbar den Pegel der Versorgungsspannung oder des Versorgungsstroms wiedergeben oder eine damit direkt verknüpfte Größe, beispielsweise ein Tastverhältnis oder eine Frequenz oder eine Pulsweite eines Steuerungssignals, das innerhalb der Stromversorgung des Sensormoduls verwendet wird. Somit kann das Versorgungssignal den Versorgungsstrom oder die Versorgungsspannung mittels der Amplitude oder mittels anderer Signalgrößen wie Frequenz, Tastverhältnis oder Pulsweite wiedergeben.

Erfindungsgemäß ist ein Eingang des A/D-Wandlers mit dem Versorgungssignalabgriff verbunden. Auch hier kann der Eingang des A/D-Wandlers direkt mit dem Versorgungssignalabgriff verbunden sein oder über weitere Signalübertragungskomponenten, etwa einen Multiplexer, mit diesem verbunden sein. Diese Verbindung kann somit direkt oder indirekt sein. Wie auch die Verbindung zwischen dem Sensorelement und dem A/D-Wandler oder die Verbindung zwischen dem A/D-Wandler und der Signalübertragungseinheit kann die Verbindung zwischen dem Eingang des A/D-Wandlers und dem Versorgungssignalabgriff über Signalaufbereitungskomponenten wie einen Verstärker, einen Impedanzwandler oder einen Spannungsteiler verbunden sein. Der A/D-Wandler, dessen Eingang mit dem Versorgungssignalabgriff auf diese Weise direkt oder indirekt verbunden ist, ist derselbe A/D-Wandler, mit dem auch das Sensorelement verbunden ist. Hierbei kann der Eingang des A/D-Wandlers, der mit dem Versorgungssignalabgriff verbunden ist, auch (indirekt) mit dem Sensorelement verbunden sein, etwa über einen Multiplexer, oder ein und derselbe A/D-Wandler weist mehrere Eingänge auf, wobei ein Eingang mit dem Versorgungssignalabgriff und ein weiterer Eingang mit dem Sensorelement verbunden ist, etwa durch eine direkte oder indirekte Verbindung, beispielsweise über einen Multiplexer innerhalb der Eingangsstufe des A/D-Wandlers. Zudem kann der A/D-Wandler als mehrkanaliger A/D-Wandler ausgebildet sein, wobei ein Kanal mit dem Versorgungssignalabgriff und ein weiterer Kanal mit dem Sensorelement verbunden sind.

Die Signalübertragungseinheit kann eingerichtet sein, ein von dem A/D-Wandler gewandeltes Versorgungssignal zu übertragen. Das gewandelte Versorgungssignal gibt die Versorgungsspannung oder den Versorgungsstrom des Sensormoduls wieder. Insbesondere gibt das gewandelte Versorgungssignal den Versorgungszustand des Sensormoduls wieder. Das gewandelte Versorgungssignal liegt insbesondere in digitaler Form vor. Das gewandelte Versorgungssignal gibt in digitaler Form das ungewandelte Versorgungssignal wieder, welches insbesondere in analoger Form vorliegt bzw. welches von dem Sensorelement abgegeben wird. Das gewandelte Versorgungssignal und das ungewandelte Versorgungssignal unterscheiden sich im Wesentlichen nur durch ihre Form, wobei das ungewandelte Versorgungssignal analog vorliegt und das gewandelte Versorgungssignal digital vorliegt. Als Versorgungssignal ohne nähere Spezifizierung werden daher das ungewandelte sowie das gewandelte Versorgungssignal bezeichnet. Die Signalübertragungseinheit weist einen Ausgang auf, an dem über die gleiche elektrische Kontaktstelle sowohl das Versorgungssignal als auch das Sensorsignal abgegeben wird, wobei Versorgungssignal und Sensorsignal zu einem einzelnen Übertragungssignal kombiniert werden. Das Übertragungssignal wird daher auch als Kombinationssignal bezeichnet. Die Kontaktstelle ist insbesondere einpolig, wobei das Kombinationssignal an einem Signalkontakt gegenüber Masse vorliegt, oder es ist zweipolig mit zwei Signalkontakten, um an eine Zweidrahtleitung angeschlossen zu werden, die das Kombinationssignal vorzugsweise symmetrisch überträgt, oder sie ist dreipolig, wobei das Kombinationssignal gegenüber Masse vorliegt und ferner zwei Versorgungskontakte der Kontaktstelle vorgesehen sind, oder sie ist vierpolig, wobei das Kombinationssignal differentiell zwischen zwei Signalkontakten übertragen wird und ein Masse- und eine Versorgungskontakt vorliegt.

Um das Versorgungssignal und das Sensorsignal (beide in gewandelter Form) zu kombinieren, wird ein Multiplexer vorgesehen. Der Multiplexer kann dem A/D-Wandler vorgeschaltet sein und das Versorgungssignal und das Sensorsignal in umgewandelter Form multiplexen, d.h. per Multiplex zu kombinieren. Das sich ergebende Signal wird von dem Multiplexer an den A/D-Wandler weitergeleitet. Dieser gibt das derart gewandelte Signal zur Übertragung an die Signalübertragungseinheit weiter. Weiterhin kann der Multiplexer in der Eingangsstufe des A/D-Wandlers vorgesehen sein, so dass sich mehrere Kanäle ergeben. Gleichermaßen kann der Multiplexer dem A/D-Wandler nachgeschaltet sein, um das gewandelte Sensorsignal und das gewandelte Versorgungssignal per Multiplex zu kombinieren. In letzterem Fall weist der A/D-Wandler mehrere Kanäle auf, wobei jedem Kanal ein spezifisches Signal, d.h. das Versorgungssignal oder das Sensorsignal, zugeordnet ist.

Im Folgenden sind bevorzugte Ausführungsformen der vorangehend beschriebenen unterschiedlichen Topologien beschrieben.

Erfindungsgemäß kann ein Multiplexer dem A/D-Wandler vorgeschaltet sein oder einen Teil einer Eingangsschnittstelle des A/D-Wandlers bilden. Der Multiplexer weist mindestens zwei Eingänge auf. Einer dieser Eingänge ist mit dem Sensorelement verbunden und ein weiterer dieser Eingänge ist mit dem Versorgungssignalabgriff verbunden. Der Multiplexer ist vorzugsweise ein Zeitmultiplexer.

Weiterhin kann vorgesehen sein, dass die Signalübertragungseinheit einen Multiplexer aufweist. Hierbei ist ein Eingang des Multiplexers mit einem Ausgang des A/D-Wandlers verbunden. Dieser Ausgang des A/D-Wandlers ist dem gewandelten Versorgungssignal zugeordnet, welches von dem A/D-Wandler gewandelt wird. Ein weiterer Eingang des Multiplexers ist mit einem Ausgang des A/D-Wandlers verbunden. Der letztgenannte Ausgang des A/D-Wandlers ist dem Sensorsignal zugeordnet.

Ferner kann der A/D-Wandler ein mehrkanaliger A/D-Wandler sein, der mehrere Wandlerelemente aufweist. Ein Eingang eines dieser Wandlerelemente ist mit dem Sensorelement verbunden und ein Eingang eines weiteren dieser Wandlerelemente ist mit dem Versorgungssignalabgriff verbunden. In dieser Konfiguration ist vorzugsweise dem mehrkanaligen A/D-Wandler ein Multiplexer nachgeschaltet. Der Multiplexer kann insbesondere ein Teil einer Eingangsstufe der Signalübertragungseinheit sein. In der letztgenannten Konfiguration werden das Sensorsignal und das Versorgungssignal parallel in den Wandlerelementen des mehrkanaligen A/D-Wandlers individuell gewandelt, wobei das gewandelte Versorgungssignal mit dem gewandelten Sensorsignal mittels eines Multiplexers kombiniert wird, der dem A/D-Wandler nachgeschaltet ist.

Das ungewandelte Versorgungssignal gibt den Versorgungszustand des Sensormoduls wieder, insbesondere den Versorgungszustand des Sensorelements, des A/D-Wandlers, der Signalübertragungseinheit und/oder weiteren Komponenten des Sensormoduls, beispielsweise eines Multiplexers. Das Versorgungssignal gibt den Versorgungszustand beispielsweise anhand einer Versorgungsspannung oder eines Versorgungsstroms wieder, die unmittelbar an dem Sensormodul oder innerhalb des Sensormoduls vorliegen. Wenn daher etwa ein Spannungsabfall in einer Versorgungszuleitung auftritt, so gibt das Versorgungssignal den tatsächlichen Versorgungszustand des Sensormoduls oder dessen Komponenten wieder und nicht die Spannung, die an einem entfernt gelegenen Punkt an die Versorgungsleitung angelegt wird. Es bestehen mehrere Möglichkeiten, den Versorgungszustand mittels des Versorgungssignals zu erfassen, wobei das Versorgungssignal an einem Versorgungssignalabgriff des Sensormoduls anliegt. Der Versorgungssignalabgriff kann ein individueller Kontakt sein oder er kann eine bloße Anzapfung oder Verzweigung einer Leitung sein, die das Versorgungssignal führt, beispielsweise eine Anzapfung oder Verzweigung einer Leiterbahn, an der das Versorgungssignal anliegt.

Erfindungsgemäß ist daher vorgesehen, dass der Versorgungssignalabgriff an einer Versorgungsspannungsschiene des Sensormoduls vorgesehen ist, an der die Versorgungsspannung anliegt. Die weiteren Komponenten des Sensormoduls, insbesondere das Sensorelement, der A/D-Wandler und/oder die Signalübertragungseinheit werden von dieser Versorgungsspannung gespeist. In einer Alternative hierzu kann der Versorgungssignalabgriff an einem Spannungsteiler vorgesehen sein, der an die Versorgungsspannungsschiene angeschlossen ist. Hierbei sind die äußeren Anschlüsse des Spannungsteilers an die Versorgungsspannungsschiene bzw. an Masse der elektrischen Versorgung des Sensormoduls angeschlossen und ein mittlerer Abgriff des Spannungsteilers sieht den Versorgungssignalabgriff vor. In den vorgenannten Beispielen gibt ein Pegel bzw. eine Amplitudenhöhe den Versorgungszustand wieder.

Eine weitere Möglichkeit ist es, dass der Versorgungssignalabgriff an einem Shunt-Widerstand vorgesehen ist, der sich in einer Stromversorgung des Sensormoduls befindet. Insbesondere ist der Shunt-Widerstand in Serie zwischen einem Versorgungseingang des Sensormoduls und den Versorgungseingängen der einzelnen Komponenten des Sensormoduls angeschlossen. Der Versorgungsstrom, der durch den Shunt-Widerstand fließt, erzeugt eine Spannung proportional zu dem Versorgungsstrom. Ein Abgriff an dem Shunt-Widerstand sieht somit das zugehörige Potenzial vor, welches unmittelbar proportional zu dem Versorgungsstrom ist. Der Versorgungssignalabgriff ist an dem Punkt des Shunt-Widerstandes mit diesem verbunden, an dem das Potenzial vorliegt. Auch hier gibt ein Pegel bzw. eine Amplitudenhöhe den Versorgungszustand wieder. Alternativ zu einem Shunt-Widerstand kann auch ein anderes Element zur Stromerfassung verwendet werden, etwa ein Hallsensor.

Eine weitere Möglichkeit ist es, dass der Versorgungssignalabgriff an einer internen Steuersignalleitung vorgesehen ist, die in einem Spannungswandler oder in einem Spannungsregler angeordnet ist. Der Spannungswandler bzw. der Spannungsregler befindet sich in einer Stromversorgung des Sensormoduls. Um die Spannung konstant zu halten oder eine bestimmte Spannungshöhe vorzusehen, sind Spannungswandler bzw. Spannungsregler geeignet, die am oder im Sensormodul und insbesondere in dessen Stromversorgung vorgesehen sind. Die interne Steuersignalleitung, mit der der Versorgungssignalabgriff verbunden ist, ist beispielsweise eine Eingangsleitung einer Endstufe des Spannungswandlers oder des Spannungsreglers. Deren Pegel gibt den Versorgungszustand wieder. Ferner kann die interne Steuersignalleitung eine Zerhackeransteuerungsleitung sein, die ein Steuersignal übermittelt, welches ein Tastverhältnis aufweist. Mittels des Tastverhältnisses wird in Spannungswandlern eine Eingangsspannung zerhackt, wobei die Höhe des Tastverhältnisses die Höhe der Ausgangsspannung bestimmt, die als Versorgungsspannung abgegeben wird. Eine derartige Steuersignalleitung sieht somit ein Signal mit einem Tastverhältnis vor, das unmittelbar die Ausgangsspannung wiedergibt. Sollte die Eingangsspannung des Spannungswandlers zu gering sein, so weist das Tastverhältnis Werte außerhalb eines Normbereichs auf. Der Versorgungsignalabgriff sieht somit ein Versorgungssignal vor, dessen Tastverhältnis den Versorgungszustand des Sensormoduls wiedergibt. Anstatt eines Tastverhältnisses kann auch die Frequenz oder eine Pulsdauer den Versorgungszustand wiedergeben, wobei in einem Spannungswandler ein Zerhacker vorgesehen ist, der gemäß dieser Frequenz oder Pulsdauer (oder auch gemäß dem vorgenannten Tastverhältnis) angesteuert wird. Hierbei gibt das Signal der Steuersignalleitung und insbesondere das Tastverhältnis, die Frequenz oder die Pulsdauer des Signals den Versorgungszustand wieder. Allgemein stellt das Versorgungssignal den Versorgungszustand dar und gibt insbesondere wieder, ob die Komponenten des Sensormoduls in einem Normbetriebsbereich mit Spannung bzw. Strom versorgt werden.

Im Falle eines Versorgungssignalabgriffs, der an einer internen Steuersignalleitung vorgesehen ist, die in einem Spannungswandler einen Zerhacker ansteuert, ist das Versorgungssignal ein binäres Signal und muss nicht notwendigerweise mittels des A/D-Wandlers gewandelt werden. In diesem Fall entspricht der A/D-Wandler, dessen Eingang mit dem Versorgungssignalabgriff verbunden ist, etwa einem Spannungsfolger oder einem Impedanzwandler bzw. einem Operationsverstärker, der den Signalpegel des Versorgungssignals an der Steuersignalleitung ändert oder anpasst und/oder der die Impedanz wandelt. Beispielsweise kann in diesem Fall der A/D-Wandler eine logisches Gatter, etwa ein Nicht-Gatter sein, um den analogen Versorgungssignalabgriff in ein gewandeltes Versorgungssignal umzuwandeln, dessen Pegel durch das Gatter definiert ist.

Die Erfindung kann ferner mittels eines Verfahrens zur Überwachung eines Sensormoduls umgesetzt werden. Die Erfindung sieht daher ferner ein Verfahren zur Überwachung eines Sensormoduls vor, welches einen Betriebsparameter eines Kraftfahrzeugs erfasst. Hierbei gibt ein Sensorelement des Sensormoduls ein Sensorsignal ab. Das vom Sensorelement abgegebene Sensorsignal wird von einem A/D-Wandler gewandelt und als gewandeltes Sensorsignal von einer Signalübertragungseinheit übertragen. Erfindungsgemäß wird ein ungewandeltes Versorgungssignal, welches eine Versorgungsspannung oder einen Versorgungsstrom des Sensormoduls wiedergibt, von dem A/D-Wandler, der auch das Sensorsignal wandelt, in ein gewandeltes Versorgungssignal konvertiert. Somit wandelt der A/D-Wandler das Sensorsignal sowie das Versorgungssignal. Hierbei entsprechen das Sensormodul, das Sensorelement, der A/D-Wandler und die Signalübertragungseinheit den vorangehend im Rahmen des Sensormoduls definierten Komponenten, die die gleiche Bezeichnung tragen.

Der A/D-Wandler kann das Sensorsignal und das Versorgungssignal gleichzeitig wandeln, wenn der A/D-Wandler als mehrkanaliger A/D-Wandler ausgeführt ist. Alternativ kann der A/D-Wandler das Versorgungssignal und das Sensorsignal nacheinander wandeln, wobei ein Zeitmultiplexer das Sensorsignal und das Versorgungssignal vor der Wandlung durch den A/D-Wandler mittels Zeitmultiplex kombiniert. Weiterhin können das Sensorsignal und das Versorgungssignal nach dem Wandeln durch den A/D-Wandler mittels Multiplex, insbesondere Zeitmultiplex, von einem Multiplexer kombiniert werden.

Gemäß einer Ausführungsform des erfindungsgemäßen Verfahrens überträgt die Signalübertragungseinheit, welche das gewandelte Sensorsignal überträgt, ferner das gewandelte Versorgungssignal. Hierbei überträgt die Signalübertragungseinheit ein Kombinationssignal, das eine Kombination aus gewandeltem Sensorsignal und gewandeltem Versorgungssignal umfasst. Die Kombination wird insbesondere durch Multiplex, vorzugsweise Zeitmultiplex, vorgesehen.

Wie oben anhand des erfindungsgemäßen Sensormoduls erläutert, kann die Kombination des gewandelten Sensorsignals mit dem gewandelten Versorgungssignal auf verschiedene Weisen erfolgen. Das gewandelte Sensorsignal und das gewandelte Versorgungssignal können mittels Multiplex zu dem Kombinationssignal kombiniert werden. Hierbei überträgt die Signalübertragungseinheit das Kombinationssignal. Ferner können das vom Sensorelement abgegebene Sensorsignal und das ungewandelte Versorgungssignal mittels Multiplex zu einem Kombinationssignal kombiniert werden, das nach Wandlung durch den A/D-Wandler von der Signalübertragungseinheit übertragen wird. Ferner kann die Signalübertragungseinheit mindestens zwei logische Kanäle zur Übertragung vorsehen. Das gewandelte Sensorsignal ist hierbei einem der logischen Kanäle zur Übertragung zugeordnet, und das gewandelte Versorgungssignal ist einem anderen der logischen Kanäle zur Übertragung zugeordnet. Beide logischen Kanäle werden zu einem Kombinationssignal kombiniert und übertragen. Zwei logische Kanäle können beispielsweise durch unterschiedliche Bitstellen in einem Datagramm oder Datenpaket erreicht werden, wobei ein erster Bitstellenabschnitt einem ersten logischen Kanal und ein zweiter Bitstellenabschnitt einem zweiten logischen Kanal zugeordnet wird. Die beiden Bitstellenabschnitte können zu einem Bitwort zusammengefast werden, welches übertragen wird. Ferner können die unterschiedlichen Kanäle durch Datenpakete vorgesehen sein, wobei eine erste Gruppe von Datenpaketen dem ersten Kanal und eine zweite Gruppe von Datenpaketen einem zweiten Kanal zugeordnet ist, wobei die Datenpakete der unterschiedlichen logischen Kanäle abwechselnd übertragen werden. Ferner kann ein und dasselbe Datenpaket Informationen umfassen, die beiden logischen Kanälen zugehören. Datenpakete umfassen ferner einen Header, in dem beispielsweise eine Zieladresse angegeben ist. Ferner können Datenpakete und/oder das oben genannte Bitwort zudem eine Information über die Priorität der logischen Kanäle umfassen. Die logischen Kanäle können insbesondere durch Zeitmultiplex oder durch andere Multiplexarten vorgesehen werden. Die logischen Kanäle können ferner, wie bereits beispielhaft erwähnt, durch unterschiedliche Bitabschnitte, durch unterschiedliche Datenpakete oder durch unterschiedliche Bitabschnitte in Datenpaketen vorgesehen sein.

Als weitere Möglichkeit kann der A/D-Wandler, der das ungewandelte Versorgungssignal wandelt, ein mehrkanaliger A/D-Wandler sein. Das ungewandelte Versorgungssignal wird von einem Kanal des mehrkanaligen A/D-Wandlers gewandelt. Das Sensorsignal wird von einem anderen Kanal des mehrkanaligen A/D-Wandlers gewandelt. Die Ausgaben der Kanäle des mehrkanaligen A/D-Wandlers werden mittels Multiplex zu einem Kombinationssignal kombiniert. Das Kombinationssignal wird von der Signalübertragungseinheit übertragen. Insbesondere wird das Kombinationssignal an eine zentrale Datenverarbeitungsvorrichtung des Kraftfahrzeugs oder an eine entfernt gelegene Datenverarbeitungsvorrichtung des Kraftfahrzeugs übertragen. Beispielhaft wird das Kombinationssignal über eine einadrige oder zweiadrige Leitung übertragen. Die Übertragung ist vorzugsweise eine serielle Übertragung. Die Übertragung kann insbesondere paketvermittelt sein oder kann ein Vielfachzugriffsverfahren umfassen.

Gemäß einer weiteren Ausführungsform des erfindungsgemäßen Verfahrens überträgt die Signalübertragungseinheit das gewandelte Sensorsignal mit einer höheren Priorität, mit einer höheren Datenübertragungsrate, mit einer höheren Auflösung oder mit einer höheren Aktualisierungsrate oder Wiederholungsrate als das gewandelte Versorgungssignal. Hierbei wird innerhalb des Kombinationssignals dem Informationsabschnitt eine höhere Priorität, eine höhere Datenübertragungsrate, eine höhere Auflösung oder eine höhere Aktualisierungsrate zugeordnet als dem gewandelten Versorgungssignal, das mit dem gleichen Kombinationssignal übertragen wird.

Das ungewandelte Versorgungssignal kann ein Spannungspegel sein, der proportional zu oder oder identisch mit der Versorgungsspannung des Sensormoduls ist. Insbesondere kann das ungewandelte Versorgungssignal ein Spannungspegel sein, der durch Spannungsteilung aus der Versorgungsspannung gewonnen wurde. Ferner kann das ungewandelte Versorgungssignal eine Spannung sein, die gemäß einem Shunt-Widerstand innerhalb der Stromversorgung des Sensormoduls proportional zu dem Versorgungsstrom des Sensormoduls ist. Das ungewandelte Versorgungssignal kann somit eine Spannung sein, die in dem Shunt-Widerstand abfällt, durch den ein Versorgungsstrom des Sensormoduls fließt.

Eine weitere Möglichkeit besteht darin, dass das ungewandelte Versorgungssignal ein internes Steuersignal innerhalb eines Spannungswandlers oder eines Spannungsreglers ist. Mit dem Spannungsregler bzw. dem Spannungswandler werden das Sensormodul oder Komponenten hiervon versorgt. Gemäß dem internen Steuersignal wird die Ausgangsspannung des Spannungswandlers oder des Spannungsreglers eingestellt. Das interne Steuersignal entspricht demjenigen internen Steuersignal, welches oben anhand des Spannungswandlers bzw. des Spannungsreglers erläutert wurde. Das Versorgungssignal kann insbesondere ein Ansteuersignal einer Endstufe sein oder eine Pulsdauer, eine Frequenz oder ein Tastverhältnis wiedergeben, mit dem ein Zerhacker des Spannungsreglers angesteuert wird.

Ein derartiges internes Steuersignal kann beispielsweise an einem entsprechenden Anschluss eines Spannungsreglers oder Spannungswandlers abgegriffen werden, beispielsweise an einem Steueranschluss.

Die Erfindung kann ferner mittels eines Kombinationssignals realisiert werden. Ein derartiges Kombinationssignal kombiniert mindestens ein Sensorsignal und ein Versorgungssignal. Das mindestens eine Sensorsignal gibt mindestens einen Betriebsparameter eines Kraftfahrzeugs wieder, wobei der mindestens eine Betriebsparameter von mindestens einem Sensormodul des Kraftfahrzeugs erfasst wurde. Das Versorgungsspannungssignal gibt eine Versorgungsspannung oder einen Versorgungsstrom wieder, der an dem mindestens einen Sensormodul vorliegt. Das Kombinationssignal gibt abwechselnd oder auf parallelen logischen Kanälen das Sensorsignal und das Versorgungssignal wieder.

Hierbei kann das Kombinationssignal das Sensorsignal und das Versorgungssignal an jeweiligen unterschiedlichen Zeitschlitzen wiedergeben. Die unterschiedlichen Zeitschlitze können als parallele logische Kanäle betrachtet werden. Die Zeitschlitze können die Folge eines synchronen oder asynchronen Zeitmultiplexverfahrens sein, so dass die Kombination durch Zeitmultiplex vorgesehen wird und die Zeitschlitze von dem Zeitmultiplexverfahren vorgesehen werden. Ferner kann das Kombinationssignal das Sensorsignal und das Versorgungssignal in wiederholt abzusenden Datenpaketen kombinieren. Ein Abschnitt jedes Datenpakets gibt das Sensorsignal wieder, und ein weiterer Abschnitt desselben Datenpakets gibt das Versorgungssignal wieder. Eine weitere Alternative besteht darin, dass das Kombinationssignal unterschiedliche Typen von Datenpaketen umfasst, wobei ein erster Typ das Sensorsignal wiedergibt und ein zweiter Typ das Versorgungssignal wiedergibt. Das Sensorsignal und das Versorgungssignal werden dadurch unterschiedlichen Paketen individuell zugeordnet. Wenn das Kombinationssignal Datenpakete umfasst, so können diese ferner Informationen über die Priorität aufweisen, wobei einem Datenabschnitt oder einem Datenpaket, welches ein Sensorsignal wiedergibt, eine höhere Priorität zugeordnet ist. Ferner kann das Kombinationssignal das Sensorsignal mit einer höheren Datenübertragungsrate oder einer höheren Auflösung wiedergeben als das Versorgungssignal. Insbesondere kann das Kombinationssignal Abschnitte aufweisen, die das Sensorsignal wiedergeben, wobei diese Abschnitte mit einer höheren Aktualisierungsrate oder Wiederholungsrate in dem Kombinationssignal auftreten als Abschnitte, die das Versorgungssignal wiedergeben oder diesem zugeordnet sind.

Das Kombinationssignal ist vorzugsweise ein serielles Signal. Insbesondere ist das Kombinationssignal ein einzelnes Signal mit einem einzigen Pegel, dessen zeitlicher Verlauf den Inhalt des Kombinationssignals wiedergibt. Auf diese Weise ist das Kombinationssignal geeignet, über eine Eindrahtleitung oder über eine (symmetrische) Zweidrahtleitung übertragen zu werden. Auf diese Weise ist das Kombinationssignal geeignet, über bestehende Verdrahtungstechniken übertragen zu werden, bei denen bereits nur eine einzelne Leitung zur Übertragung eines Sensorsignals vorgesehen ist, wobei erfindungsgemäß das Kombinationssignal und somit auch das Versorgungssignal über diese Leitung übertragen werden.

Gemäß einem Aspekt der Erfindung gibt das Kombinationssignal das Versorgungssignal als eine tiefpassgefilterte Version des Versorgungssignals wieder. Dadurch können kurze Spannungsabfälle, die beispielsweise durch Pufferung keine nachteiligen Auswirkungen haben, ausgefiltert werden und von der weiteren Verarbeitung ausgenommen werden. Gleichermaßen kann das Sensorsignal als eine tiefpassgefilterte Form hiervon in dem Kombinationssignal vorliegen.

Erfindungsgemäß weist das Sensormodul einen Tiefpass auf, der sich zwischen dem A/D-Wandler und dem Versorgungssignalabgriff so befindet, dass das ungewandelte Versorgungssignal tiefpassgefiltert wird, bevor es dem A/D-Wandler zugeführt wird. Ein derartiger Tiefpass ist vorzugsweise ein analoger Tiefpass. Ferner kann das Sensormodul einen Tiefpass aufweisen, der sich zwischen A/D-Wandler und Signalübertragungseinheit befindet. Ein derartiger Tiefpass der letztgenannten Art ist vorzugsweise ein digitaler Tiefpass. Ferner kann in einer Eingangsstufe der Signalübertragungseinheit ein Tiefpass vorgesehen sein, der vorzugsweise digital ist. Ferner ist es möglich, dass ein Tiefpass zwischen dem Sensorelement und dem A/D-Wandler bzw. zwischen dem A/D-Wandler und der Signalübertragungseinheit vorliegt.

In einer weiteren entsprechenden Ausführungsform sieht das erfindungsgemäße Verfahren vor, dass das ungewandelte Versorgungssignal tiefpassgefiltert wird, bevor es dem A/D-Wandler zugeführt wird. In gleicher Weise kann das Sensorsignal vor der Wandlung durch den A/D-Wandler oder nach der Wandlung durch den A/D-Wandler tiefpassgefiltert werden.

### Kurze Beschreibung der Zeichnungen

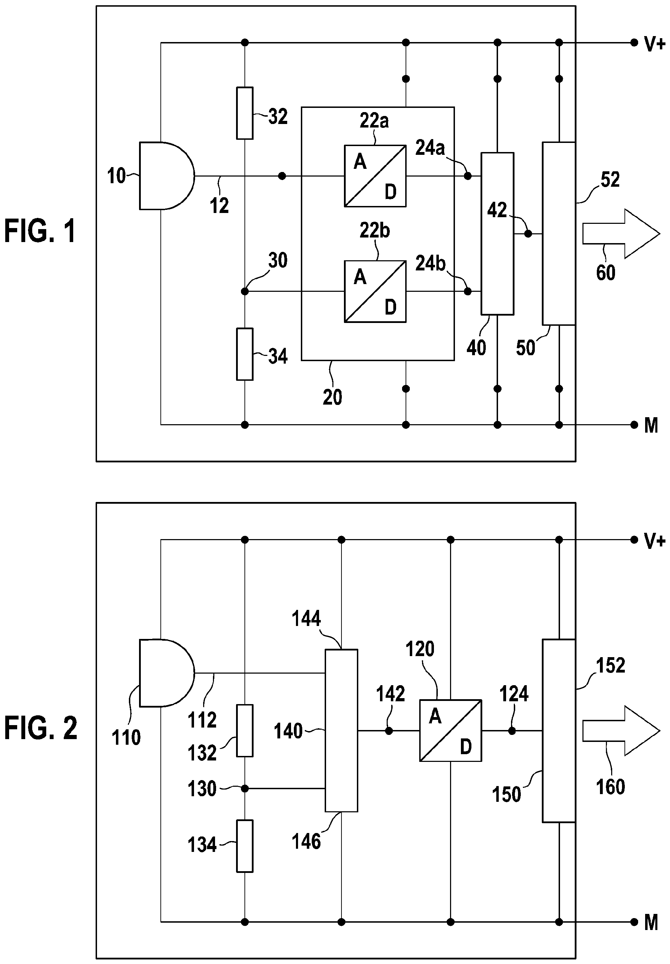

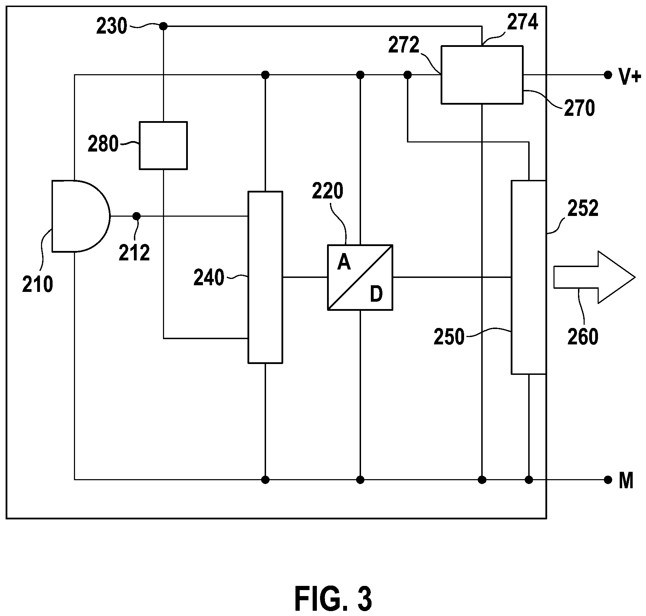

Die Figur 1 zeigt ein erstes Beispiel eines Sensormoduls, das nicht Teil der Erfindung ist; die Figur 2 ein zweites Beispiel eines Sensormoduls, das nicht Teil der Erfindung ist; und die Figur 3 zeigt eine Ausführungsform des erfindungsgemäßen Sensormoduls.

Beispiele, die nicht Teil der Erfindung sind, und Ausführungsformen der Erfindung

Die Figur 1 zeigt ein erstes Beispiel eines Sensormoduls, das nicht Teil der Erfindung ist, mit einem Sensorelement 10 mit einem Ausgang 12, der eingerichtet ist, ein Sensorsignal des Sensors 10 abzugeben. Der Sensor 10 ist ferner mit den Versorgungsspannungspotenzialen V+ und M verbunden und wird über diese mit elektrischer Leistung versorgt. Das in Figur 1 dargestellte Sensormodul umfasst ferner einen A/D-Wandler 20 mit zwei Wandlerelementen 22a, 22b. Der A/D-Wandler 20 ist somit mehrkanalig ausgeführt, wobei ein erster Kanal durch das Wandlerelement 22a und ein weiterer Kanal durch das Wandlerelement 22b vorgesehen wird. Während der erste Kanal, d.h. das Wandlerelement 22a, mit dem Ausgang 12 des Sensorelements 10 verbunden ist, ist das Wandlerelement 22b mit einem Versorgungssignalabgriff 30 verbunden. Der Versorgungssignalabgriff 30 entspricht einem mittleren Abgriff eines ohmschen Spannungsteilers, der durch zwei serielle Widerstände 32, 34 gebildet wird. Die Widerstände 32, 34 des Spannungsteilers sind seriell angeordnet und mit den Versorgungsspannungspotenzialen V+ und M verbunden. Das am mittleren Abgriff des Spannungsteilers vorliegende Potenzial gibt die Versorgungsspannung wieder, die gemäß dem Verhältnis der Widerstände 32 und 34 zueinander verringert ist.

Wie auch der Sensor 10, ist der A/D-Wandler 20 mit den Versorgungsspannungspotenzialen V+ und M verbunden. Die Wandlerelemente 22a und 22b werden somit von den Versorgungsspannungspotenzialen V+ und M versorgt.

Das Sensormodul der Figur 1 umfasst ferner einen Multiplexer 40, der für jedes der Wandlerelemente 22a und 22b jeweils einen Eingang aufweist. Jeder Kanal bzw. jedes Wandlerelement 22a, 22b des A/D-Wandlers 20 sieht einen Ausgang 24a, 24b vor, der mit einem zugehörigen Eingang des Multiplexers 40 verbunden ist. Der Multiplexer 40 kombiniert die Pegel der Ausgänge 24a, 24b des A/D-Wandlers 20 mittels Multiplex und gibt das resultierende Kombinationssignal an einem Ausgang 42 des Multiplexers ab. Das Wandlerelement 22b, mit dem das ungewandelte Versorgungssignal gewandelt wird bzw. der Kanal, der dem Versorgungssignal zugeordnet ist, kann eine geringere zeitliche oder wertebezogene Auflösung aufweisen als das andere Wandlerelement 22a bzw. der andere Kanal. In spezifischen Ausführungsformen kann das Wandlerelement 22b von einem Komparator oder einem logischen Gatter vorgesehen sein, wodurch nur zwei verschiedene Ausgangspegel des gewandelten Versorgungssignals vorgesehen werden. Das Wandlerelement des Versorgungssignals weist in diesem Fall eine Auflösung von nur zwei Stufen auf, wobei vorzugsweise das Wandlerelement des Versorgungssignals eine Auflösung von mehr als zwei Stufen aufweist, etwa 2^{N} Stufen mit N = 4, 6, 8 oder mehr.

Das Sensormodul umfasst ferner eine Signalübertragungseinheit 50, deren Eingang mit dem Ausgang 42 des Multiplexers 40 verbunden ist. Die Übertragungseinheit sieht eine physikalische Ein-/Ausgabeschnittstelle 52 vor, an die eine Leitung anschließbar ist. Der Pfeil 60 gibt symbolhaft den Übertragungsweg an, mittels dessen die Signalübertragungseinheit 50 Signale über die Ein-/Ausgabeschnittstelle 52 überträgt, beispielsweise an zentrale und/oder entfernt gelegene Datenverarbeitungsvorrichtungen. Die Ein-/Ausgabeschnittstelle 52 umfasst vorzugsweise einen Steckkontakt und ist insbesondere eine serielle Schnittstelle. Die durch den Pfeil 60 gekennzeichnete Übertragung der Signalübertragungseinheit 50 führt zu einer zentralen Datenverarbeitungseinheit, die insbesondere als Bordcomputer des Kraftfahrzeugs ausgeführt ist, in dem sich das Sensormodul befindet. Die Versorgungsspannungspotenziale M und V+ sind mit dem Bordnetz des Kraftfahrzeugs verbunden, so dass das Sensormodul von dem Bordnetz versorgt werden kann.

In dem Beispiel der Figur 1 werden zwei getrennte Kanäle zur Verarbeitung des Sensorsignals und des Versorgungssignals verwendet, wobei ein dem A/D-Wandler 20 nachgeschalteter Multiplexer 40 die beiden gewandelten Signale mittels Multiplex und insbesondere mittels Zeitmultiplex kombiniert. Anstatt einer Kombination mittels Zeitmultiplex kann der Multiplexer auch auf andere Weise zwei oder mehr logische Kanäle vorsehen, die über einen gemeinsamen physikalischen Kanal der Ausgabeschnittstelle 52 von der Signalübertragungseinheit 50 parallel übertragen werden. Die logischen Kanäle werden durch Mehrfachzugriffsverfahren vorgesehen und insbesondere durch Zeit-, Frequenz- oder Codemultiplex.

Das in Figur 2 dargestellte Beispiel eines Sensormoduls umfasst einen Sensor 110 mit einem Ausgang 112, wobei das Sensormodul 110 von den Versorgungspotenzialen V+ und M versorgt wird. Der Ausgang 112 des Sensorelements 110 ist mit einem Eingang eines Multiplexers 140 verbunden. Ein weiterer Eingang des Multiplexers 140 ist mit einem Versorgungssignalabgriff 130 verbunden. Der Versorgungssignalabgriff 130 wird wie in Figur 1 von einem mittleren Abgriff eines Spannungsteilers vorgesehen. Der Spannungsteiler wird von den seriell geschalteten Widerständen 132 und 134 gebildet, wobei der Spannungsteiler äußere Anschlüsse aufweist, die mit den Versorgungsspannungspotenzialen M und V+ verbunden sind. Der Multiplexer 140 wird ebenso durch entsprechende Verbindungen von den Versorgungsspannungspotenzialen V+ und M versorgt. Der Multiplexer 140 weist daher Versorgungseingänge 144, 146 auf, die mit den Versorgungsspannungspotenzialen M und V+ verbunden sind. Der Multiplexer 140 weist einen Ausgang 142 auf, der mit einem Eingang eines A/D-Wandlers 120 verbunden ist. Der Ausgang 142 des Multiplexers 140 ist mit einem Eingang des A/D-Wandlers 120 verbunden. Der Ausgang 142 des Multiplexers 140 sieht ein Kombinationssignal vor, welches sich durch Kombination des ungewandelten Sensorsignals und des ungewandelten Versorgungssignals mittels Multiplex ergibt. Der A/D-Wandler 120 wandelt das in analoger Form vorliegende Kombinationssignal um und gibt dieses an einem Ausgang 124 des A/D-Wandlers 120 ab. Dieser ist mit einem Eingang einer Signalübertragungseinheit 150 verbunden, die eine Ausgabeschnittstelle 152 aufweist. Die Signalübertragungseinheit 150 ist zur Übermittlung des Kombinationssignals eingerichtet, wobei die entsprechende Übertragung durch den Pfeil 160 dargestellt ist. Sowohl der A/D-Wandler 120 als auch die Signalübertragungseinheit 150 sind Teil des Versorgungsmoduls und werden von den Versorgungsspannungspotenzialen M und V+ mit elektrischer Leistung versorgt.

Das in Figur 2 dargestellte Beispiel sieht vor, dass der Multiplexer 140 dem A/D-Wandler 120 vorgeschaltet ist. Dadurch erhält der A/D-Wandler 120 bereits ein kombiniertes Signal, welches aus einer Kombination der ungewandelten (und somit analogen) Sensor- und Versorgungssignale besteht.

Die Figur 3 zeigt eine Ausführungsform des erfindungsgemäßen Sensormoduls mit einem Sensorelement 210, einem dem Sensorelement 210 nachgeschalteten Multiplexer 240 sowie mit einem dem Multiplexer 240 nachgeschalteten A/D-Wandler 220. Die in Figur 3 dargestellte Ausführungsform umfasst ferner eine Signalübertragungseinheit 250, die dem A/D-Wandler 220 nachgeschaltet ist. Diese Konfiguration entspricht der in Figur 2 dargestellten Konfiguration. Die in Figur 3 dargestellte Ausführungsform unterscheidet sich von der in Figur 2 dargestellten Ausführungsform hinsichtlich der Versorgung der Komponenten des Sensormoduls sowie hinsichtlich des Versorgungssignalabgriffs. Hierbei sieht die in Figur 3 dargestellte Ausführungsform vor, dass der Multiplexer 240 einen ersten Eingang aufweist, der mit einem Ausgang 212 des Sensorelements 210 verbunden ist, sowie einen zweiten Eingang, der mit einem Versorgungssignalabgriff 230 verbunden ist. Im Gegensatz zu der in Figur 2 dargestellten Ausführungsform ist der Versorgungssignalabgriff 230 mit einem Spannungsregler 270 verbunden. Dieser Spannungsregler 270 umfasst einen Spannungseingang, der mit dem Versorgungsspannungspotenzial V+ verbunden ist, sowie einen Steuereingang, der mit der Masse der Versorgungsspannung verbunden ist, die dem Potenzial M entspricht. Der Spannungsregler 270 umfasst ferner einen Spannungsausgang 272, der zur Versorgung mit den Komponenten des Sensormoduls verbunden ist. Insbesondere ist der Versorgungsausgang 272 des Spannungswandlers 270 mit Versorgungseingängen des Sensorelements 210, des Multiplexers 240, des A/D-Wandlers 220 und der Signalübertragungseinheit 250 verbunden. Der Spannungsregler 270 umfasst ferner einen Steuersignalausgang 274, der (mittelbar) mit dem Versorgungssignalabgriff 230 verbunden ist. Der Steuerausgang 274 ist mit einer internen Steuersignalleitung des Spannungsreglers 270 verbunden, mit der beispielsweise eine Endstufe des Spannungsreglers 270 angesteuert wird, oder die ein Signal einer Regelung oder Steuerung des Spannungsreglers führt, mittels der die Ausgangsspannung am Ausgang 272 des Spannungsreglers 270 eingestellt wird.

Das in Figur 3 dargestellte erfindungsgemäße Sensormodul umfasst einen Tiefpass 280, der dem Versorgungssignalabgriff 230 nachgeschaltet und dem Multiplexer 240 vorgeschaltet ist. Der Tiefpass 280 ist (mittelbar) dem A/D-Wandler 220 vorgeschaltet. Dadurch werden weniger relevante Spannungsspitzen ausgefiltert.

Der Spannungsregler 270 erzeugt ein Versorgungssignal, das am Versorgungssignalabgriff 230 anliegt und das durch den nachgeordneten Tiefpass 280 tiefpassgefiltert wird, bevor es dem Multiplexer 240 zugeführt wird. Der Multiplexer 240 erhält ferner von dem Ausgang 212 des Sensorelements 210 ein Sensorsignal. Das Sensorsignal und das Versorgungssignal, die der Multiplexer 240 erhält, werden durch den Multiplexer 240 kombiniert. Das kombinierte Signal wird dem A/D-Wandler 220 zugeführt, welcher das so entstehende Kombinationssignal in digitalisierter Form der Signalübertragungseinheit 250 weiterleitet. Die Signalübertragungseinheit 250 weist eine Ausgabeschnittstelle 252 auf, mittels der das Kombinationssignal in digitaler Form übertragen wird. Der Pfeil 260 gibt den Übertragungsweg für das Kombinationssignal an. Gegenüber den Ausführungsformen der Figuren 1 und 2 wird das ungewandelte Versorgungssignal des Versorgungssignalabgriffs 230 von dem nachgeschalteten Tiefpass 280 aufbereitet, bevor das Versorgungssignal mit dem Sensorsignal von dem Multiplexer 240 kombiniert wird.

In einer Alternative zum in Figur 1 dargestellten Beispiel, ist der Multiplexer 40 ein Teil der Eingangsstufe der Signalübertragungseinheit 50. Dadurch kann eine Schnittstelle zwischen dem Multiplexer und der Signalübertragungseinheit eingespart werden.

Die Signalübertragungseinheit sieht vorzugsweise eine serielle Ausgangsschnittstelle vor, die vorzugsweise Bitworte überträgt, die das Kombinationssignal wiedergeben. Die Ausgabeschnittstelle der Signalübertragungseinheit kann ferner eingerichtet sein, Steuersignale zu übertragen, die der Erstellung und der Aufrechterhaltung einer Kommunikationsverbindung dienen. Insbesondere kann die Signalübertragungseinheit eingerichtet sein, das Kombinationssignal paketvermittelnd zu übertragen. Hierbei werden Daten in Form von Paketen übertragen, die das Kombinationssignal wiedergeben und in denen Headerinformation vorhanden ist, beispielsweise eine Zieladresse und/oder eine Übertragungspriorität. Das Sensorsignal und das Versorgungssignal können hierbei auf unterschiedliche Pakete verteilt oder jeweils kombiniert in den Paketen vorgesehen sein. Insbesondere ist die Signalübertragungseinheit eingerichtet, das Kombinationssignal bzw. das Sensorsignal und das Versorgungssignal gemäß einem der folgenden Standards zu übertragen: LIN (ISO 15765-2), CAN (ISO 11898), SENT (SAE J2716) oder PSI5. Ferner können die Signalübertragungseinheit und insbesondere deren Ausgabeschnittstelle gemäß einem anderen Übertragungsprotokollstandard ausgebildet sein.

## Patentansprüche

1. Sensormodul eingerichtet zur Erfassung eines Betriebsparameters eines Kraftfahrzeugs, umfassend: ein Sensorelement (210) eingerichtet zur Abgabe eines Sensorsignals, einen mit dem Sensorelement (210) verbundenen A/D-Wandler (220), eine mit dem A/D-Wandler (220) verbundene Signalübertragungseinheit (250) eingerichtet zur Übertragung eines vom A/D-Wandler (220) gewandelten Sensorsignals, und einen Versorgungssignalabgriff (230), an dem ein ungewandeltes Versorgungssignal anliegt, welches eine Versorgungsspannung oder einen Versorgungsstrom des Sensormoduls wiedergibt, wobei ein Eingang des A/D-Wandlers (220) mit dem Versorgungssignalabgriff (230) verbunden ist, **dadurch gekennzeichnet, dass**
das Sensormodul einen Tiefpass aufweist, der sich zwischen dem A/D-Wandler (220) und dem Versorgungssignalabgriff (230) befindet, so dass das ungewandelte Versorgungssignal tiefpassgefiltert wird.

2. Sensormodul nach Anspruch 1, wobei die Signalübertragungseinheit (250) eingerichtet ist, ein von dem A/D-Wandler (220) gewandeltes Versorgungssignal zu übertragen, welches die Versorgungsspannung oder den Versorgungsstrom des Sensormoduls wiedergibt.

3. Sensormodul nach Anspruch 1 oder 2, wobei ein Multiplexer (240) dem A/D-Wandler (220) vorgeschaltet ist oder einen Teil einer Eingangsschnittstelle des A/D-Wandler bildet, wobei der Multiplexer mindestens zwei Eingänge aufweist, einer dieser Eingänge mit dem Sensorelement verbunden ist und ein weiterer dieser Eingänge mit dem Versorgungssignalabgriff verbunden ist; oder die Signalübertragungseinheit einen Multiplexer aufweist oder der Multiplexer der Signalübertragungseinheit unmittelbar vorgeschaltet ist, wobei ein Eingang des Multiplexers mit einem Ausgang des A/D-Wandlers verbunden ist, der einem von dem A/D-Wandler gewandeltem Versorgungssignal zugeordnet ist, und ein weiterer Eingang des Multiplexers mit einem Ausgang des A/D-Wandlers verbunden ist, der dem Sensorsignal zugeordnet ist; oder wobei der A/D-Wandler ein mehrkanaliger A/D-Wandler ist, der mehrere Wandlerelemente aufweist und ein Eingang eines dieser Wandlerelemente mit dem Sensorelement verbunden ist und ein Eingang eines weiteren dieser Wandlerelemente mit dem Versorgungssignalabgriff verbunden ist.

4. Sensormodul nach einem der vorangehenden Ansprüche, wobei der Versorgungssignalabgriff an einer Versorgungsspannungsschiene des Sensormodul vorgesehen ist, an der die Versorgungsspannung anliegt, oder der Versorgungssignalabgriff an einem Spannungsteiler vorgesehen ist, der an die Versorgungsspannungsschiene (V+, M) angeschlossen ist, oder wobei der Versorgungssignalabgriff an einem Shunt-Widerstand vorgesehen ist, der sich in einer Stromversorgung des Sensormoduls befindet, oder wobei der Versorgungssignalabgriff an einer internen Steuersignalleitung vorgesehen ist, die in einem Spannungswandler oder einem Spannungsregler angeordnet ist, der sich in einer Stromversorgung des Sensormoduls befindet.

5. Verfahren zur Überwachung eines Sensormoduls, welches einen Betriebsparameter eines Kraftfahrzeugs erfasst, wobei ein Sensorelement (210) des Sensormoduls ein Sensorsignal abgibt, das von einem A/D-Wandler (220) gewandelt wird und als gewandeltes Sensorsignal von einer Signalübertragungseinheit übertragen wird, wobei ein ungewandeltes Versorgungssignal, welches eine Versorgungsspannung oder einen Versorgungsstrom des Sensormoduls wiedergibt, von dem A/D-Wandler (220), der das Sensorsignal wandelt, in ein gewandeltes Versorgungssignal gewandelt wird,
**dadurch gekennzeichnet, dass**
das ungewandelte Versorgungssignal tiefpassgefiltert wird, bevor es dem A/D-Wandler zugeführt wird.

6. Verfahren nach Anspruch 5, wobei die Signalübertragungseinheit, welche das gewandelte Sensorsignal überträgt, ferner das gewandelte Versorgungssignal überträgt.

7. Verfahren nach Anspruch 5 oder 6, wobei das gewandelte Sensorsignal und das gewandelte Versorgungssignal mittels Multiplex zu einem Kombinationssignal kombiniert werden und die Signalübertragungseinheit das Kombinationssignal überträgt; oder wobei das vom Sensorelement abgegebene Sensorsignal und das ungewandelte Versorgungssignal mittels Multiplex zu einem Kombinationssignal kombiniert werden, das nach Wandlung durch den A/D-Wandler von der Signalübertragungseinheit übertragen wird; oder wobei die Signalübertragungseinheit mindestens zwei logische Kanäle zur Übertragung vorsieht, wobei das gewandelte Sensorsignal einem der logischen Kanäle zur Übertragung zugeordnet ist und das gewandelte Versorgungssignal einem anderen der logischen Kanäle zur Übertragung zugeordnet ist; oder wobei der A/D-Wandler, der das ungewandelte Versorgungssignal wandelt, ein mehrkanaliger A/D-Wandlers ist und das ungewandelte Versorgungssignal von einem Kanal des mehrkanaligen A/D-Wandlers gewandelt wird, wobei das Sensorsignal von einem anderen Kanal des mehrkanaligen A/D-Wandlers gewandelt wird, und die Ausgaben der Kanäle des mehrkanaligen A/D-Wandlers mittels Multiplex zu einem Kombinationssignal kombiniert werden, das von der Signalübertragungseinheit übertragen wird.

8. Verfahren nach einem der Ansprüche 5 - 7, wobei die Signalübertragungseinheit ferner das gewandelte Sensorsignal überträgt mit einer höheren Priorität, mit einer höheren Datenübertragungsrate, mit einer höheren Auflösung, oder mit einer höheren Aktualisierungsrate überträgt, als das gewandelte Versorgungssignal.

9. Verfahren nach einem der Ansprüche 5 - 8, wobei das ungewandelte Versorgungssignal ein Spannungspegel ist, der proportional zu oder identisch mit der Versorgungsspannung des Sensormoduls ist, oder eine Spannung ist, die gemäß einem Shunt-Widerstand innerhalb der Stromversorgung des Sensormoduls proportional zu dem Versorgungsstrom des Sensormoduls ist, oder ein internes Steuersignal innerhalb eines Spannungswandlers oder eines Spannungsreglers (270) ist, mit dem das Sensormodul versorgt wird, gemäß dem die Ausgangsspannung des Spannungswandlers oder des Spannungsreglers (270) eingestellt wird.

## Claims

1. Sensor module configured to capture an operating parameter of a motor vehicle, comprising: a sensor element (210) configured to deliver a sensor signal, an A/D converter (220) connected to the sensor element (210), a signal transmission unit (250), connected to the A/D converter (220), configured to transmit a sensor signal converted by the A/D converter (220), and a supply signal tap (230) to which an unconverted supply signal reproducing a supply voltage or a supply current of the sensor module is applied, wherein an input of the A/D converter (220) is connected to the supply signal tap (230), **characterized in that** the sensor module has a low-pass filter situated between the A/D converter (220) and the supply signal tap (230), so that the unconverted supply signal is subjected to low-pass filtering.

2. Sensor module according to Claim 1, wherein the signal transmission unit (250) is configured to transmit a supply signal, converted by the A/D converter (220), reproducing the supply voltage or the supply current of the sensor module.

3. Sensor module according to Claim 1 or 2, wherein a multiplexer (240) is connected upstream of the A/D converter (220) or forms part of an input interface of the A/D converter, wherein the multiplexer has at least two inputs, one of these inputs is connected to the sensor element and another of these inputs is connected to the supply signal tap; or the signal transmission unit has a multiplexer or the multiplexer is connected directly upstream of the signal transmission unit, wherein one input of the multiplexer is connected to an output of the A/D converter that is associated with a supply signal converted by the A/D converter, and another input of the multiplexer is connected to an output of the A/D converter that is associated with the sensor signal; or wherein the A/D converter is a multichannel A/D converter that has multiple converter elements and an input of one of these converter elements is connected to the sensor element and an input of another of these converter elements is connected to the supply signal tap.

4. Sensor module according to one of the preceding claims, wherein the supply signal tap is provided on a supply voltage rail of the sensor module to which the supply voltage is applied, or the supply signal tap is provided on the voltage divider connected to the supply voltage rail (V+, M), or wherein the supply signal tap is provided on a shunt resistor situated in a current supply of the sensor module, or wherein the supply signal tap is provided on an internal control signal line arranged in a voltage transformer or a voltage regulator situated in a current supply of the sensor module.

5. Method for monitoring a sensor module that captures an operating parameter of a motor vehicle, wherein a sensor element (210) of the sensor module delivers a sensor signal that is converted by an A/D converter (220) and is transmitted as a converted sensor signal by a signal transmission unit, wherein an unconverted supply signal reproducing a supply voltage or a supply current of the sensor module is converted into a converted supply signal by the A/D converter (220) that converts the sensor signal, **characterized in that**
the unconverted supply signal is subjected to low-pass filtering before being supplied to the A/D converter.

6. Method according to Claim 5, wherein the signal transmission unit that transmits the converted sensor signal furthermore transmits the converted supply signal.

7. Method according to Claim 5 or 6, wherein the converted sensor signal and the converted supply signal are combined by means of multiplexing to produce a combination signal, and the signal transmission unit transmits the combination signal; or wherein the sensor signal delivered by the sensor element and the unconverted supply signal are combined by means of multiplexing to produce a combination signal that, after conversion by the A/D converter, is transmitted by the signal transmission unit; or wherein the signal transmission unit provides at least two logical channels for transmission, wherein the converted sensor signal is associated with one of the logical channels for transmission and the converted supply signal is associated with another of the logical channels for transmission; or wherein the A/D converter that converts the unconverted supply signal is a multichannel A/D converter and the unconverted supply signal is converted by one channel of the multichannel A/D converter, wherein the sensor signal is converted by another channel of the multichannel A/D converter, and the outputs from the channels of the multichannel A/D converter are combined by means of multiplexing to produce a combination signal that is transmitted by the signal transmission unit.

8. Method according to one of Claims 5-7, wherein the signal transmission unit furthermore transmits the converted sensor signal with a higher priority, at a higher data transmission rate, with a higher resolution or at a higher update rate than the converted supply signal.

9. Method according to one of Claims 5-8, wherein the unconverted supply signal is a voltage level that is proportional to or identical to the supply voltage of the sensor module, or is a voltage that is proportional to the supply current of the sensor module in accordance with the shunt resistor within the current supply of the sensor module, or is an internal control signal within a voltage transformer or a voltage regulator (270) with which the sensor module is supplied, according to which the output voltage of the voltage transformer or of the voltage regulator (270) is adjusted.

## Revendications

1. Module de capteur disposé pour saisir un paramètre opérationnel d'un véhicule à moteur, comprenant :
un élément de capteur (210) disposé pour émettre un signal de capteur,
un convertisseur A/N (220) relié à l'élément de capteur (210),
une unité de transmission de signal (250) reliée au convertisseur A/N (220), disposée pour transmettre un signal de capteur converti par le convertisseur A/N (220), et
une prise de signal d'alimentation (230), à laquelle s'applique un signal d'alimentation non converti, lequel reproduit une tension d'alimentation ou un courant d'alimentation du module de capteur,
dans lequel une entrée du convertisseur A/N (220) est reliée à la prise de signal d'alimentation (230),
**caractérisé en ce que** le module de capteur comprend un passe-bas, lequel se trouve entre le convertisseur A/N (220) et la prise de signal d'alimentation (230), de sorte que le signal d'alimentation non converti fait l'objet d'un filtrage passe-bas.

2. Module de capteur selon la revendication 1, dans lequel l'unité de transmission de signal (250) est disposée pour transmettre un signal d'alimentation converti par le convertisseur A/N (220), lequel reproduit la tension d'alimentation ou le courant d'alimentation du module de capteur.

3. Module de capteur selon la revendication 1 ou 2, dans lequel un multiplexeur (240) est raccordé au convertisseur A/N (220) ou forme une partie d'une interface d'entrée du convertisseur A/N, dans lequel le multiplexeur comporte au moins deux entrées, une de ces entrées est reliée à l'élément de capteur et une autre de ces entrées est reliée à la prise de signal d'alimentation ; ou l'unité de transmission de signal comporte un multiplexeur ou le multiplexeur est directement raccordé à l'unité de transmission de signal, dans lequel une entrée du multiplexeur est reliée à une sortie du convertisseur A/N ordonnée à un signal d'alimentation converti par le convertisseur A/N, et une autre entrée du multiplexeur est reliée à une sortie du convertisseur A/N ordonnée au signal de capteur ; ou dans lequel le convertisseur A/N est un convertisseur A/N multicanaux, lequel comporte plusieurs éléments convertisseurs et une entrée d'un de ces éléments convertisseurs est reliée à l'élément de capteur et une entrée d'un autre de ces éléments convertisseurs est reliée à la prise de signal d'alimentation.

4. Module de capteur selon l'une des revendications précédentes, dans lequel la prise de signal d'alimentation est prévue à un rail de tension d'alimentation aux bornes duquel la tension d'alimentation est appliquée, ou la prise de signal d'alimentation est prévue à un diviseur de tension branché au rail de tension d'alimentation (V+, M), ou dans lequel la prise de signal d'alimentation est prévue à une résistance de shunt, laquelle se trouve dans une alimentation en courant du module de capteur, ou dans lequel la prise de signal d'alimentation est prévue à une ligne interne de signal de commande, laquelle est agencée dans un transformateur de tension ou dans un régulateur de tension se trouvant dans une alimentation en courant du module de capteur.

5. Procédé de contrôle d'un module de capteur saisissant un paramètre opérationnel d'un véhicule à moteur, dans lequel un élément de capteur (210) du module de capteur émet un signal de capteur, lequel est converti par un convertisseur A/N (220) et est transmis en tant que signal de capteur converti depuis une unité de transmission de signal, dans lequel un signal d'alimentation non converti, lequel reproduit une tension d'alimentation ou un courant d'alimentation, est converti en un signal d'alimentation converti par le convertisseur A/N (220) convertissant le signal de capteur, **caractérisé en ce que** le signal d'alimentation non converti fait l'objet d'un filtrage passe-bas avant d'être envoyé au convertisseur A/N.

6. Procédé selon la revendication 5, dans lequel l'unité de transmission de signal transmettant le signal de capteur converti transmet en outre le signal d'alimentation converti.

7. Procédé selon la revendication 5 ou 6, dans lequel le signal de capteur converti et le signal d'alimentation converti sont combinés par multiplexage en un signal combiné et l'unité de transmission de signal transmet le signal combiné ; ou dans lequel le signal de capteur émis par l'élément de capteur et le signal d'alimentation non converti sont combinés par multiplexage en un signal combiné, transmis depuis l'unité de transmission de signal après conversion par le convertisseur A/N ; ou dans lequel l'unité de transmission de signal prévoit au moins deux canaux logiques pour la transmission, dans lequel le signal de capteur converti est ordonné à un des canaux logiques pour la transmission et le signal d'alimentation converti est ordonné à un autre des canaux logiques pour la transmission ; ou dans lequel le convertisseur A/N convertissant le signal d'alimentation non converti est un convertisseur A/N multicanaux et le signal d'alimentation non converti est converti par un canal du convertisseur A/N multicanaux, dans lequel le signal de capteur est converti par un autre canal du convertisseur A/N multicanaux, et les émissions des canaux du convertisseur A/N multicanaux sont combinées par multiplexage en un signal combiné, transmis depuis l'unité de transmission de signal.

8. Procédé selon l'une des revendications 5 à 7, dans lequel l'unité de transmission de signal transmet en outre le signal de capteur converti avec une priorité supérieure, avec une vitesse de transmission de données supérieure, avec une résolution supérieure, ou avec une fréquence de rafraîchissement supérieure, par rapport au signal d'alimentation converti.

9. Procédé selon l'une des revendications 5 à 8, dans lequel le signal d'alimentation non converti est un niveau de tension proportionnel à ou identique à la tension d'alimentation du module de capteur, ou est une tension qui, selon une résistance de shunt à l'intérieur de l'alimentation en courant du module de capteur, est proportionnelle au courant d'alimentation du module de capteur, ou est un signal de commande interne à l'intérieur d'un transformateur de tension ou d'un régulateur de tension (270), alimentant le module de capteur et selon lequel la tension de sortie du transformateur de tension ou du régulateur de tension (270) est paramétrée.
